# EUROPÄISCHE PATENTSCHRIFT

(11) **EP 3 603 941 B1**
(45) Veröffentlichungstag und Bekanntmachung des Hinweises auf die Patenterteilung: **05.04.2023**
(21) Anmeldenummer: 19189783.4
(22) Anmeldetag: 02.08.2019
(51) Int. Cl.: B29C 67/20, E04B 1/68, E06B 1/62, B29K 105/04

(54) **HERSTELLUNGSVERFAHREN FÜR DICHTBAND UND DICHTBAND**
METHOD FOR PRODUCING SEALING STRIP AND SEALING STRIP
PROCÉDÉ DE FABRICATION POUR UNE BANDE D'ÉTANCHÉITÉ ET BANDE D'ÉTANCHÉITÉ

(30) Priorität: 02.08.2018 DE 102018118854
(43) Veröffentlichungstag der Anmeldung: 05.02.2020
(73) Patentinhaber: Tremco CPG Germany GmbH, 92439 Bodenwöhr (DE)
(72) Erfinder: Nauck, Helmar, 12557 Berlin (DE); Geyer, Walter, 92421 Schwandorf (DE); Komma, Markus, 93133 Burglengenfeld (DE); Köppl, Alfred, 92431 Neunburg v.W. (DE)
(74) Vertreter: Bittner, Bernhard

(56) Entgegenhaltungen:
- EP-A1- 2 990 552
- EP-A1- 3 278 967
- US-A1- 2016 059 536
- US-A1- 2016 060 068
- US-A1- 2016 060 863

## Beschreibung

Die vorliegende Erfindung bezieht sich auf ein Verfahren zum Herstellen eines Dichtbandes und auf ein Dichtband. Aus dem Stand der Technik sind unterschiedlichste Dichtbänder für unterschiedlichste Anwendungsbereiche bekannt. So sind auch Dichtbänder bekannt, welche auf einem Schaumstoffträger eine Beschichtung aufweisen, welche beispielsweise die Dampfdiffusion reduzieren soll. Aus dem Stand der Technik sind diverse Vorgehensweisen für die Herstellung derartiger Dichtbänder bekannt. So ist es beispielsweise bekannt, dass ein Schaumstoffträger aufgeschnitten wird und in einen Schnittbereich eine Folie eingebracht wird. US 2016/059536 A1 und EP 2 990 552 A1 offenbaren eine Vorrichtung zum Schneiden eines Schaumstoffträgers in Streifen.

Diese Vorgehensweisen sind jedoch relativ aufwändig. Der vorliegenden Erfindung liegt daher die Aufgabe zugrunde, ein Verfahren zur Verfügung zu stellen, welches in einfacherer Weise eine Herstellung derartiger Dichtbänder ermöglicht. Diese Aufgabe wird erfindungsgemäß durch den Gegenstand des unabhängigen Patentanspruchs gelöst. Weiterhin liegt der vorliegenden Erfindung die Aufgabe zugrunde, ein Dichtband zur Verfügung zu stellen, welches einerseits eine einfache Anordnung an einem Bauteil bzw. einer Wandung ermöglicht und andererseits einen zufriedenstellenden Dichteffekt bewirkt.

Bei einem erfindungsgemäßen Verfahren zum Herstellen eines Dichtbandes wird zunächst ein Schaumstoffträger zur Verfügung gestellt und dieser wenigstens zeitweise in einer vorgegebenen Transportrichtung transportiert. In einem weiteren Verfahrensschritt wird wenigstens eine erste Oberfläche des Schaumstoffträgers bearbeitet und/oder auf diese Oberfläche (insbesondere thermisch d. h. durch Erwärmung und/oder Erhitzung eingewirkt. In einem weiteren Verfahrensschritt wird der Schaumstoffträger in wenigstens zwei und bevorzugt eine Vielzahl von Streifen geschnitten. Weiterhin wird an einer weiteren Oberfläche der einzelnen Streifen eine Selbstklebung angebracht.

Erfindungsgemäß beinhaltet die Bearbeitung der Oberfläche zumindest eine Erwärmung dieser Oberfläche.

Bevorzugt handelt es sich um eine Oberfläche, welche sich zumindest auch in der Transportrichtung des Schaumstoffträgers erstreckt. Bevorzugt erstreckt sich diese Oberfläche auch senkrecht zu dieser Oberfläche. Bevorzugt ist diese Oberfläche horizontal ausgerichtet.

Auf diese Weise wird erreicht, dass jeder der geschnittenen Streifen an einer Oberfläche eine veränderte physikalische Struktur und insbesondere eine Verhautung aufweist und an einer weiteren Oberfläche eine Selbstklebung aufweist. Vorteilhaft stehen dabei diese beiden Flächen senkrecht zueinander. Bei einem weiteren bevorzugten Verfahren weisen diese Streifen jeweils einen im Wesentlichen rechteckigen Querschnitt auf.

Bei der bearbeiteten Oberfläche handelt es sich insbesondere um eine Oberfläche, die aufgrund der thermischen Bearbeitung und insbesondere der Erwärmung eine verringerte Durchlässigkeit für Dampf, Gas oder Flüssigkeiten aufweist.

Im Gegensatz zum internen Stand der Technik der Anmelderin wird daher an der besagten Oberfläche keine (oder nicht nur eine) Beschichtung angebracht, sondern es wird direkt das Material des Schaumstoffträgers bearbeitet und insbesondere erwärmt bzw. erhitzt. Bevorzugt wird das Material des Schaumstoffs derart erhitzt, dass an der erwärmten Oberfläche physikalische Veränderungen des Schaumstoffs auftreten.

Durch die oben erwähnte Erwärmung der Oberfläche und insbesondere eine Erhitzung des Schaumstoffträgers entsteht an dieser besagten Oberfläche eine sogenannte Selbstverhautung bzw. eine Hautschicht, die jedoch auf dem gleichen PU-Schaummaterial basiert, wie der Schaumstoffträger selbst.

Bevorzugt werden bei diesem Prozess entstehende Dämpfe abgeführt. Insbesondere werden diese Dämpfe abgeführt und/oder gereinigt, insbesondere um Bedienungspersonal zu schützen.

Im Gegensatz zum Stand der Technik wird also vorgeschlagen, dass kein zusätzliches Material oder eine zusätzliche Beschichtung aufgebracht wird, sondern diese Oberfläche behandelt wird, insbesondere wärmebehandelt wird und sich bevorzugt in wenigstens einer physikalischen Eigenschaft verändert.

Dabei ist es möglich, dass insbesondere an einer Seitenfläche bzw. Oberfläche der insgesamt entstehenden Streifen eine Verhautung durch den genannten Kalandrierprozess entsteht und eine andere Seitenfläche eine Selbstklebung angeordnet ist bzw. wird.

Bei einem bevorzugten Verfahren wird durch die Erwärmung ein vorgegebener Anteil der Dicke des Schaumstoffträgers abgeschmolzen. Bevorzugt erfolgt dabei diese Abschmelzung im Wesentlichen einheitlich, das heißt im Wesentlichen einheitlich über die besagte Oberfläche des Schaumstoffträgers hinweg. Durch diesen Abschmelzvorgang ergibt sich bevorzugt auch eine physikalische und/oder chemische Veränderung des Schaumstoffträgers.

Bei einem weiteren bevorzugten Verfahren wird die genannte erste Oberfläche mit einer Temperatur bearbeitet und/oder auf eine Temperatur erhitzt, die größer ist als 100°C, bevorzugt größer als 150°C, bevorzugt größer als 200°C und besonders bevorzugt größer als 250°C. Bei einem weiteren bevorzugten Verfahren wird die genannte erste Oberfläche mit einer Temperatur bearbeitet und/oder auf eine Temperatur erhitzt, die kleiner ist als 1000°C, bevorzugt kleiner als 800°C, bevorzugt kleiner als 600°C und besonders bevorzugt kleiner als 400°C.

Bevorzugt erfolgt die Bearbeitung durch Kontakt des Schaumstoffträgers mit einer erhitzten Rolleneinrichtung. Es wäre jedoch auch möglich, diese Erhitzung auf andere Weise zu erreichen, etwa durch Infrarotheizelemente, denen gegenüber der Schaumstoffträger bewegt wird.

Es wäre jedoch auch möglich, dass gleichzeitig mit dem Erhitzen und insbesondere durch eine Rolleneinrichtung auch Druck auf den Schaumstoffträger ausgeübt wird. Weiterhin ist es möglich, dass es sich bei der Rolleneinrichtung um eine Transportwalze handelt, welche den Schaumstoffträger auch fördert.

Dabei wird bevorzugt die Verhautung in einer einheitlichen Dicke oder in einer im Wesentlichen einheitlichen Dicke hergestellt.

Bei einem weiteren bevorzugten Verfahren wird eine Dicke des Schaumstoffträgers um wenigstens einen Zentimeter durch die Bearbeitung der Oberfläche reduziert. Bevorzugt wird die Dicke um wenigstens 0,5cm, bevorzugt um wenigstens 1,5 cm und bevorzugt um wenigstens 2,5 cm reduziert. Bevorzugt wird die Dicke des Schaumstoffträgers durch die Bearbeitung der Oberfläche um höchstens 10 cm, bevorzugt um höchstens 8 cm, bevorzugt um höchstens 6 cm, bevorzugt um höchstens 5 cm und bevorzugt um höchstens 4 cm reduziert.

Bei einer bevorzugten Ausführungsform weist die so entstehende Oberfläche, welche bearbeitet wurde, eine Dicke auf, die kleiner ist als 4 mm, bevorzugt kleiner als 3 mm, bevorzugt kleiner als 2 mm und besonders bevorzugt kleiner als 1 mm.

Bei einem weiteren bevorzugten Verfahren handelt es sich bei dem Schaumstoffträger um einen imprägnierten Schaumstoffträger. Dabei ist es möglich und bevorzugt, dass dieser imprägnierte Schaumstoffträger getrocknet wird, bevor er wie oben beschrieben bearbeitet wird.

Bevorzugt ist es dabei möglich, dass die Bearbeitung der Oberfläche an einem imprägnierten und getrockneten Schaumstoffträger oder an einem unimprägnierten Schaumstoffträger vorgenommen wird.

Daneben wäre es auch denkbar, dass Abschmelzen mittels Strahlung und insbesondere mittels Laserstrahlung durchzuführen. Dabei wäre sowohl ein punktuelles als auch ein flächiges Abschmelzen möglich.

Bei einem bevorzugten Verfahren wird in einem weiteren Verfahrensschritt wenigstens einer und bevorzugt eine Vielzahl der geschnittenen Streifen um einen vorgegebenen Winkel gedreht. Dabei wäre es möglich, dass nur einer der geschnitten Streifen gedreht wird, es könnten mehrere der Streifen oder auch alle der Streifen um einen vorgegebenen Winkel gedreht werden.

Bevorzugt erfolgt diese Drehung bezüglich einer Längsrichtung der einzelnen Streifen und/oder einer Richtung, welche zu der Transportrichtung parallel ist. Bevorzugt werden sämtliche Streifen einheitlich gedreht und/oder jeweils um den gleichen Winkel gedreht.

Bevorzugt wird die Bearbeitung lückenlos und/oder durchgehend an dem Schaumstoffträger bzw. der genannten Oberfläche durchgeführt bzw. angebracht. Vorteilhaft erstrecken sich die besagten Schnitte ebenfalls in einer Transportrichtung des Schaumstoffträgers. Dabei ist es jedoch möglich, dass der Schaumstoffträger beim Einbringen der Schnitte ruht, beispielsweise auf einer Ablage liegt.

Bei einem weiteren bevorzugten Verfahren erstreckt sich der Schaumstoffträger in der Transportrichtung und in einer hierzu senkrechten Breitenrichtung. Dabei kann sich der Schaumstoffträger in der besagten Breitenrichtung beispielsweise um einen Meter erstrecken.

Bei einem bevorzugten Verfahren wird zunächst eine Bearbeitung an der ersten Oberfläche des Schaumstoffträgers vorgenommen, anschließend erfolgt das Schneiden des Schaumstoffes und anschließend wird die Selbstklebung angebracht.

Es wäre jedoch auch denkbar, zunächst eine Selbstklebung anzubringen, anschließend den Schaumstoff mit der daran angeordneten Selbstklebung in Streifen zu schneiden und schließlich noch die Bearbeitung durchzuführen.

Daneben wäre es auch denkbar, zunächst den Schaumstoffträger in Streifen zu schneiden und anschließend an diesem, bevorzugt zeitgleich, sowohl die Bearbeitung durchzuführen als auch die Selbstklebung anzubringen.

Bevorzugt behält die bearbeitete Oberfläche auch nach der Bearbeitung eine gewisse Flexibilität bei.

Bevorzugt könnte auch zusätzlich noch zu der Bearbeitung eine Beschichtung an der besagten Oberfläche und/oder an einer dieser gegenüberliegenden Oberfläche angeordnet werden.

Bei einem bevorzugten Verfahren handelt es sich bei der zusätzlichen Beschichtung um eine flexible Beschichtung. Vorteilhaft handelt es sich hierbei um eine dünne Beschichtung. Diese weist besonders bevorzugt eine Dicke auf, die zwischen 10µm und 1mm, bevorzugt zwischen 50µm und 200µm liegt. Weiterhin ist besonders bevorzugt die Beschichtung aus einer Gruppe von Beschichtungen ausgewählt, welche Kunststoffmaterialien enthält.

Bei einer bevorzugten Ausführungsform handelt es sich bei der Beschichtung um eine Folienbeschichtung bzw. Folienkaschierung. Diese Beschichtung besteht bevorzugt aus einem Kunststoff, der aus einer Gruppe von Kunststoffen ausgewählt ist, welche PU, PP, PE, PVC, PET, TPU und dergleichen enthält. Daneben können auch metallisierte Kunststoffe verwendet werden.

Daneben wäre es auch möglich, als Beschichtung eine Metallfolie zu verwenden. Darüber hinaus könnten auch Vliesstoffe verwendet werden, die dabei mit oder ohne eine/r Imprägnierung verwendet werden könnten. Schließlich könnten auch elastische Membranen, wie etwa EPDM-Folien verwendet werden. Daneben wäre es auch denkbar, dass es sich bei der Beschichtung um eine Kaschierung mit einer weiteren Schicht Schaumstoff handelt. Dieser weitere Schaumstoff kann dabei in imprägnierter oder nicht imprägnierter Ausführung zur Verfügung stehen. Dabei kann für diesen weiteren Schaumstoff ebenfalls ein Schaumstoff aus einer Gruppe von Schaumstoffen ausgewählt werden, welche PU, PP, PE, PVC, TPU, EPDM und dergleichen enthält.

Der Vorteil, eine zusätzliche elastische und/oder flexible Folie und/oder Kaschierung bzw. Beschichtung zu verwenden liegt darin, dass das Anlegen von Längskanten dieser Schicht an Fugenflanken, der sogenannte Flankenschluss, leichter ermöglicht wird. Je nach vorgesehener Anwendung des Dichtbandes sollte die Kaschierung bzw. die Beschichtung diese Anforderungen erfüllen. Bei zusätzlichen Anwendungen wäre es auch möglich oder zusätzlich möglich, dass diese Beschichtungen UV-beständig, wasserfest, schlagregendicht, überstreichbar und/oder überputzbar sind.

In einem weiteren Verfahren ist es auch denkbar, dass die Schaumstoffbahn nicht nur einseitig, sondern beidseitig bearbeitet wird, und insbesondere an zwei aneinander gegenüberliegenden Seiten. Dabei ist es dann denkbar, dass diese Ober- und Unterseite des Vorprodukts der Schaumstoffbahn eine Innen- und Außenseite des Endprodukts Dichtband ergeben. Der Vorteil einer derartigen beidseitigen Bearbeitung bzw. Erwärmung, könnten Beschichtungen mit unterschiedlichen Eigenschaften speziell auf die Anforderungen der Ausrichtungen Endprodukt sein.

Es wäre auch denkbar, dass an einer Seite eine Bearbeitung vorgenommen wird und an der gegenüberliegenden Seite eine Beschichtung, insbesondere eine Beschichtung der oben genannten Art aufgebracht wird.

Denkbar wäre hier beispielsweise eine UV-stabile Beschichtung und eine dampfoffene Beschichtung auf einer Außenseite und dagegen eine (dampfdichtende bzw. dampfbremsende und luftdichte) Bearbeitung auf der Innenseite.

Bevorzugt wird der Schaumstoffträger kontinuierlich transportiert. Es wäre jedoch auch ein getakteter Transport denkbar. Dabei ist es möglich, dass der Schaumstoffträger selbst während des Einbringens der Schnitte ruht und stattdessen sich Schneidemesser bewegen und insbesondere sich in einer vorgegebenen Längsrichtung des Schaumstoffträgers bewegen und insbesondere in der Richtung, in der der Schaumstoffträger ansonsten, das heißt wenn nicht die Schnitte eingebracht werden, transportiert wird.

Bei den Messern kann es sich beispielsweise um sich drehende Messer handeln bzw. um Messerscheiben.

Bei einem weiteren bevorzugten Verfahren ist der Schaumstoffträger ein imprägnierter Schaumstoffträger, besonders bevorzugt ein zur verzögerten Rückstellung imprägnierter Schaumstoffträger. Vorteilhaft ist der Schaumstoffträger auch ein getrockneter Schaumstoffträger und besonders bevorzugt ein Schaumstoffträger, der vor der Bearbeitung imprägniert und getrocknet wurde. Die Bearbeitung kann sowohl vor als auch nach dem Imprägnieren vorgenommen werden.

Bei einem bevorzugten Verfahren werden als Imprägnate wässrige Dispersionen verwendet. Bevorzugt werden wässrige Dispersionen mit Acrylat-Bindern verwendet. Daneben könnten jedoch auch andere Imprägnierungen verwendet werden, insbesondere Kleb- oder Dichtstoffe in verschieden flüssigen Medien. Bei diesen Kleb- oder Dichtstoffen kann es sich beispielsweise um Acrylate, Bitumen, Polyurethane, Harze und dergleichen handeln.

Als flüssige Medien kommen beispielsweise Wasser mit oder ohne Zusatzstoffe oder auch organische Lösungsmittel in Betracht.

Bei dem Schaumstoffträger kann es sich beispielweise um einen Polyurethan-Schaumstoff handeln. Dieser Schaustoff weist dabei bevorzugt einen Rohdichte auf, die zwischen 5 und 100 kg/m³, bevorzugt zwischen 10 und 80 kg/m³, bevorzugt zwischen 10 und 60 kg/m³, bevorzugt zwischen 15 und 50 kg/m³ und besonders bevorzugt zwischen 20 und 40 kg/m³ liegt.

Bevorzugt weist der Schaumstoff (in dem unbearbeiteten Zustand) eine Stauchhärte auf, die zwischen 1 kPa und 8 kPa, bevorzugt zwischen 2 kPa und 6 kPa, bevorzugt zwischen 3 kPa und 4 kPa liegt.

Bei einer bevorzugten Ausführungsform liegt eine Luftdurchlässigkeit des (unbearbeiteten) Schaumstoffs zwischen 100 und 10 000 l/m³/s, bevorzugt zwischen 200 und 5 000 l/(m³ *s), bevorzugt zwischen 200 und 2 000 l/(m³ *s), besonders bevorzugt zwischen 300 und 900 l/(m³ *s). Diese Werte beziehen sich dabei auf eine Messung nach DIN EN ISO 9237, mit einer Prüfkörperdicke von 10 mm, einer Prüffläche von 10 cm², einem Prüfunterdruck von 0,5 mbar. Bei dem Messgerät handelt es sich um ein Frank-Gerät Typ 21443. An einem Muster von 10 mm dickem imprägnierten Schaum wurden bei vorstehenden Randbedingungen ca. 700 l/m2 x sec gemessen.

Der bearbeitete Schaumstoff weist (unter Verwendung der obigen Messbedingungen) eine Luftdurchlässigkeit auf, die größer ist als 10 l/m³/s, bevorzugt größer als 20 l/m³/s. Bevorzugt ist die Luftdurchlässigkeit geringer als 200 l/m³/s, bevorzugt geringer als 100 l/m³/s.

Bei einem weiteren bevorzugten Verfahren werden die einzelnen Streifen um jeweils 90 ° bezüglich der Transportrichtung gedreht. Weiterhin erfolgt bevorzugt ein Ablängen der Streifen. Das Ablängen erfolgt in der Regel und bevorzugt als Bahn, aus dieser werden dann die - schon abgelängten - Streifen geschnitten.

Bei einem bevorzugten Verfahren wird die Bearbeitung auf einer nach oben oder unten weisenden Oberfläche des Schaumstoffträgers vorgenommen. Bevorzugt liegt damit nach dem Drehen der einzelnen Streifen um 90 ° diese bearbeitete Oberfläche in einer vertikalen Ausrichtung. So kann die Drehung der Schaumstoffstreifen sowohl um 90 ° in als auch um 90 ° entgegen dem Uhrzeigersinn erfolgen.

Es ist auch denkbar, dass nach dem Schneiden die Streifen nicht gedreht werden. Hier kann eine Variante des Verfahrens angewendet werden, bei dem die Selbstklebung seitlich zu den Steifen geführt wird und bevorzugt Einzelrollen liegend komprimiert und aufgerollt werden.

Bei diesem Verfahren wäre es denkbar, dass zunächst die einzelnen Streifen geschnitten werden und anschließend bevorzugt in einer zu der Transportrichtung senkrecht stehenden Richtung gegenüber einander verschoben werden, so dass insbesondere auch die Seitenflächen dieser Streifen für die Anbringung einer Selbstklebung zugänglich werden. Dabei wäre es sowohl denkbar, dass die Streifen in einer Höhenrichtung gegenüber einander versetzt werden, etwa beispielsweise abwechselnd nach oben und nach unten versetzt werden.

Auch wäre es denkbar, dass die einzelnen Streifen in einer (ebenfalls zu der Transportdichtung senkrecht stehenden) Breitenrichtung zueinander versetzt werden und auch hierdurch die einzelnen Seitenflächen für die Anbringung der Selbstklebung zugänglich werden.

Bei einem bevorzugten Verfahren werden daher wenigstens einige der geschnittenen Streifen derart bezüglich einander verschoben bzw. versetzt, sodass deren Seitenflächen, bei denen es sich insbesondere um diejenigen Flächen handelt, entlang derer die Schnitte erfolgt sind, für die Anbringung der Selbstklebung zugänglich werden.

Bevorzugt könnten bei diesem Verfahren zwischen den einzelnen geschnittenen Streifen bewusst Zwischenräume erzeugt werden, in denen die Selbstklebungen eingefügt werden können. Zum Einfügen dieser Selbstklebungen könnten etwa Wellenstummel verwendet werden, welche in diese Zwischenräume ragen.

Durch die Drehung um 90 ° können mehrere Einzelrollen auf einer Welle mit einem Antrieb gewickelt werden. Wenn auf die Drehung verzichtet wird, kann bevorzugt für jede Einzelrolle ein Wellenstummel verwendet werden, wobei bevorzugt jeweils ein separater Antrieb für den Wellenstummel vorgesehen ist.

Bei einem weiteren bevorzugten Verfahren werden die geschnittenen Streifen wenigstens teilweise aufgerollt, wobei bevorzugt während dieses Aufrollens die Streifen in wenigstens einer Richtung komprimiert werden.

Vorteilhaft wird dabei diejenige Oberfläche, auf der die Beschichtung aufgebracht ist, komprimiert.

Bevorzugt erfolgt eine Komprimierung auf weniger als 25 % der Ausgangshöhe des frei voll expandierten Schaumstoffstreifens, bevorzugt auf weniger als 20 % der Ausgangshöhe, bevorzugt auf weniger als 18 % und besonders bevorzugt auf weniger als 15 % der Ausgangshöhe. Letzteres bedeutet, dass der Schaumstoffstreifen um 85 % komprimiert wird.

Bei einem weiteren bevorzugten Verfahren werden die einzelnen Streifen bezüglich einer horizontalen Rollenachse aufgerollt.

Bei einem weiteren vorteilhaften Verfahren werden die Streifen zum Aufbringen der Selbstklebung auf ein Selbstklebeband geführt und insbesondere komprimiert. Damit erfolgt bevorzugt sowohl das Anbringen der Selbstklebung und auch das Komprimieren der Schaumstoffstreifen in einem gemeinsamen Schritt.

Bei einem bevorzugten Verfahren verlaufen die expandierten Streifen zwischen zwei Komprimierwalzen. Zwischen diesen Komprimierwalzen werden die Streifen auf einen vorgesehenen Komprimiergrad (beispielsweise die oben genannten Werte oder beispielsweise 9 - 18%). Von einer Vorratsrolle wird eine Selbstklebung wie etwa ein Selbstklebestreifen zugeführt und an den komprimierten Schaum verhaftet und gepresst. Diese Kombination wird bevorzugt anschließend auf einen Kern aufgewickelt und mit einer oder mehreren Wicklungen Klebeband in der komprimierten Form gesichert.

Grundsätzlich wäre es möglich, dass das Schneiden der Schaumstoffbahn in einem voll expandierten Zustand erfolgt oder auch in einem teilweise komprimierten Zustand. Bei einem bevorzugten Verfahren ist es denkbar, dass die bearbeitete Bahn, das heißt die bereits mit der bearbeiteten Oberfläche versehene Schaumstoffbahn in einer vollen Länge (beispielsweise 10 m) auf einen Tisch ausgelegt wird.

Von dieser Bahn werden anschließend einzelne Streifen geschnitten. Dieser Streifen kann dabei dem Prinzip einer Brotschneidemaschine folgen. Bevorzugt bewegt sich das Schneidewerkzeug, bei dem es sich beispielsweise um ein Rundmesser, eine Säge oder oszillierende Schneide handeln kann, um das Werkstück, das heißt der Schaumstoff bleibt liegen. Zum Fixieren der Schaumstoffbahn kann dabei mittels einer Druckvorrichtung, wie etwa einem Druckbalken oder Druckrollen, eine leichte Komprimierung erfolgen.

Bevorzugt ist die durch die Bearbeitung entstandene Oberfläche luftdicht. Dabei wäre es auch denkbar, dass diese luftdichte Oberfläche es auch ermöglicht, die Schaumstoffbahn mittels eines Vakuums zu fixieren.

Auch wäre es denkbar, dass mehrere Streifen gleichzeitig mittels mehrerer Schneidwerkzeuge geschnitten werden.

Bei einer weiteren bevorzugten Vorgehensweise wird die bereits bearbeitete Bahn ohne eine Selbstklebung komprimiert und aufgedockt. Von diesem Dock können wiederum Rollen, in einer gewünschten Breite abgestochen werden. Diese Rollen werden von der Weiterverarbeitung bevorzugt geöffnet und die Bänder können expandieren. Anschließend wird wie oben genauer beschrieben, die Selbstklebung aufgebracht.

Bei dieser Vorgehensweise ergibt sich eine erhebliche Erleichterung bei der Zwischenlagerung und dem Transport der Vorprodukte.

Bei einem bevorzugtem Verfahren werden die Streifen derart geschnitten, dass die Streifen in einem im Wesentlichen vollständig expandierten Zustand einen mindestens quadratischen Querschnitt haben, das heißt eine Breite des Streifens größer als dessen Höhe ist. Dabei gibt die Breite die auf der Selbstklebung befindliche oder die ihr gegenüberliegende Seite an.

Bei einem weiteren bevorzugten Verfahren wäre es auch denkbar, dass die Schaumstoffbahn zunächst geschnitten wird und anschließend die Bearbeitung an den einzelnen Streifen vorgenommen wird. Bei dieser Vorgehensweise könnte auf und/oder an den Streifen eine Bearbeitung vor dem Komprimieren auf die Selbstklebefolie vorgenommen werden. Dabei wäre es auch denkbar, dass die Beschichtung seitlich aber auch oben, unten oder unten und oben aufgebracht wird.

Zum Schneiden sind mehrere Vorgehensweisen denkbar. Dabei ist es möglich und bevorzugt, dass ein Schneiden nach dem Verhauten erfolgt. Dabei kann das Schneiden bei einem bevorzugten Verfahren mittels rotierender Schneidmesser erfolgen.

Bei einem weiteren bevorzugten Verfahren wird das Schaumstoffmaterial zunächst verhautet bzw. wie oben erwähnt bearbeitet und anschließend imprägniert. In diesem Falle würde bewusst ein etwas aufwändigerer Trocknungsprozess in Kauf genommen werden, weil als Vorteil die Hautschicht stabiler wäre. Es wäre jedoch auch möglich, dass zunächst die Imprägnierung erfolgt und dann die Verhauten (d. h. das Schmelzen an einer Oberfläche).

Bevorzugt handelt es sich bei dem Selbstklebeband, wie oben erwähnt, um ein doppelseitiges Klebeband. Dabei kann dieses doppelseitige Klebeband auf der dem Schaumstoff abgewandten Seite zunächst noch mit einem Liner ausgestattet sein. In diesem Falle ist es möglich, dass ein Aufrollen der Kombination aus dem Schaumstoffträger, der Selbstklebung und dem Liner erfolgt.

In einem auf der Rolle aufgewickelten Zustand weist damit das Band eine außenliegende Bearbeitung auf.

Bevorzugt handelt es sich bei dieser Beschichtung um eine Folienkaschierung oder um einen Dichtstoff.

Bei einem weiteren vorteilhaften Verfahren wird an einer zweiten Oberfläche des Schaumstoffträgers eine Beschichtung angebracht, Auf diese Weise wird eine Möglichkeit geschaffen eine gezielte Steuerung von Eigenschaften zu erreichen wie etwa innen diffusionshemmend und luftdicht, außen hingegen diffusionsoffen und schlagregendicht.

Die vorliegende Erfindung ist weiterhin auf ein als Dichtbandrolle konfektioniertes Dichtband gerichtet, welches sich in einer ersten Längsrichtung und in einer zu dieser ersten Längsrichtung senkrechten Breitenrichtung erstreckt, wobei dieses Dichtband eine erste Oberfläche aufweist, welches sich in dieser Längsrichtung sowie der Breitenrichtung erstreckt und eine zweite Oberfläche aufweist, welche der ersten Oberfläche gegenüber liegt, wobei an einer dieser beiden Oberflächen eine Klebeschicht angeordnet ist.

Daneben weist das Dichtband eine dritte Oberfläche auf, welche sich in der Längsrichtung sowie in einer Dickenrichtung des Bandes erstreckt sowie eine vierte Oberfläche, welche der dritten Oberfläche gegenüber liegt und welche sich ebenfalls in der Längsrichtung und der Dickenrichtung erstreckt, wobei die dritte Oberfläche und/oder die vierte Oberfläche eine durch einen Erwärmungsprozess bearbeitete Oberfläche ist.

Weiterhin ist bevorzugt das Dichtband nach einem Verfahren der oben beschriebenen Art gefertigt.

Bei einer weiteren vorteilhaften Ausführungsform ist das Dichtband in einem in der Dickenrichtung komprimierten Zustand aufgerollt. Daher liegen bevorzugt die dritte und vierte Oberfläche in dem aufgerollten Zustand jeweils nach außen bzw. sind Seiten oder Stirnflächen der Dichtbandrolle.

Bei einer weiteren vorteilhaften Ausführungsform ist an der bearbeiteten Oberfläche kein zusätzliches Material wie insbesondere eine Beschichtung angeordnet. Bevorzugt ist die bearbeitete Oberfläche aus dem gleichen Material hergestellt wie die übrigen Bereiche des Schaumstoffträgers.

Bevorzugt besteht also der Schaumstoffträger von der dritten Oberfläche in Richtung der vierten Oberfläche aus dem gleichen Material. Dabei ist es denkbar, dass das Material durch den Bearbeitungsvorgang und insbesondere durch den Erhitzungsvorgang verändert wird.

Bevorzugt sind also auch an der bearbeiteten Oberfläche keine weiteren Materialien angeordnet und insbesondere keine Materialien, die sich in einem Grundzustand, das heißt in einem nicht bearbeiteten Zustand von dem Material des Schaumstoffträgers unterscheiden.

Bei einer weiteren vorteilhaften Ausführungsform unterscheidet sich die bearbeitete Oberfläche in wenigstens einer physikalischen Eigenschaft von anderen Oberflächen und insbesondere von dem Schaumstoffträger selbst.

Die Erhitzung und ein gewisser Druck (dessen Einstellung z. B. über Walzenspalt erfolgen kann) bewirken einen Schmelzprozess am unimprägnierten und imprägnierten Schaumstoff. Beispielsweise werden ca. 3 mm abgeschmolzen, die eine Haut von ca. 0,5 mm ergeben. Daran schließt sich nach unten eine Übergangszone von max. 5 mm an, die sich durch deformierte Zellen auszeichnet. Direkt an der Haut stärker deformiert als zu weiter ab von der Haut hin.

Bei einer bevorzugten Ausführungsform ist die bearbeitete Oberfläche in der Art einer Haut oder sehr dünnen Schicht ausgebildet. Bevorzugt weist diese Haut eine Dicke auf, die geringer ist als 3 mm, bevorzugt geringer als 2 mm und besonders bevorzugt geringer als 1 mm.

Bei einer weiteren vorteilhaften Ausführungsform geht die Verhautung in einem Übergangsbereich in den Grundkörper des Schaumstoffs über. Dies bedeutet, dass bevorzugt ein Übergangsbereich existiert, in dem der Schaumstoff teilweise bearbeitet ist. Dabei kann es sich etwa um einen Bereich handeln, in dem der Schaumstoff teilweise verschmolzen ist.

Vorteilhaft weist dieser Übergangsbereich eine Dicke auf, die größer ist als 1 mm, bevorzugt größer als 2 mm und besonders bevorzugt größer als 3 mm.

Bei einer weiteren bevorzugten Ausführungsform weist dieser Übergangsbereich eine Dicke auf, die kleiner ist als 10 mm, bevorzugt kleiner als 8 mm, bevorzugt kleiner als 7 mm, bevorzugt kleiner als 6 mm und bevorzugt kleiner als 5 mm. Die Dicke dieses Übergangsbereichs kann dabei insbesondere auch durch die Art der Erhitzung gesteuert werden. Die genannte Dicke hat sich als besonders günstig für das physikalische Verhalten des Dichtbandes herausgestellt.

Bei einer weiteren vorteilhaften Ausführungsform weist die Oberfläche einen höheren sd-Wert (Wasserdampfdiffusionswiderstand) als der Basisträger aus dem Schaumstoff auf. Der nur imprägnierte Schaum kann beispielsweise einen einen Sd-Wert von mehr als 0,01m, bevorzugt von mehr als 0,02m, bevorzugt von mehr als 0,03m aufweisen und/oder kann einen Wert von weniger als 0,2 m, bevorzugt von weniger als 0,15 m, bevorzugt von weniger als 0,1 m und bevorzugt von weniger als 0,06 m aufweisen.

Der verhautete Schaumstoff weist bevorzugt einen Sd- Wert von mehr als 0,1, bevorzugt von mehr als 0,2 auf. Weiterhin bevorzugt weist der verhautete Schaumstoff einen Sd-Wert von weniger als 1,0, bevorzugt von weniger als 0,8, bevorzugt von weniger als 0,6 auf.

Bevorzugt ist der Sd-Wert des verhauteten Schaumstoffs mehr als zweimal so hoch, bevorzugt mehr als 4mal so hoch und bevorzugt mehr als 6mal so hoch wie der Sd-Wert des entsprechenden unverhauteten Schaumstoffs.

Dabei beziehen sich diese Werte insbesondere auf ein Messverfahren nach DIN EN ISO 12572 bei einer Rel. Feuchte von 0/50 % und einer Temperatur von 23 °C. (Prüfkörperbreite unverhautet 12 mm, Prüfkörperdicke 10 mm, Prüfkörperbreite verhautet 12 mm, -dicke 5 mm).

Bei einer weiteren vorteilhaften Ausführungsform weist der Schaumstoffträger selbst eine Reißdehnung von zwischen 120 % und 200 % auf. Die (bearbeitete) Oberfläche weist demgegenüber eine Reißdehnung auf, die geringer ist als 140 %, bevorzugt geringer als 130 %, bevorzugt geringer als 120 %. Die Messung kann dabei in Anlehnung an ein DIN EN 12311-2, Verfahren erfolgen

Bei einer weiteren vorteilhaften Ausführungsform ist die Oberfläche und/oder die Verhautung vollflächig ausgebildet. Bei einer weiteren besonders bevorzugten Ausführungsform ist die verhautete Oberfläche nur abschnittsweise ausgebildet, das heißt beispielsweise weist diese Streifen in einer Längsrichtung und/oder der Transportrichtung des Schaumstoffträgers auf.

Bei einer weiteren vorteilhaften Ausführungsform ist eine Gesamtdicke des Schaumstoffträgers (insbesondere in einem Bereich maximaler Höhe) höher als 25 mm, bevorzugt höher als 50 mm, bevorzugt höher als 60 mm. Besonders bevorzugt ist eine Gesamtdicke des Schaumstoffträgers (insbesondere in einem Bereich maximaler Höhe) geringer als 200 mm, bevorzugt geringer als 180 mm, bevorzugt geringer als 150 mm, bevorzugt geringer als 130 mm, bevorzugt geringer als 100 mm.

Bei einer weiteren vorteilhaften Ausführungsform weist das Dichtband besonders bevorzugt eine weitere beschichtete Oberfläche auf. Insbesondere handelt es sich dabei um eine Oberfläche, welche der genannten bearbeiteten Oberfläche gegenüberliegt.

Weitere Vorteile und Ausführungsformen ergeben sich aus den beigefügten Zeichnungen:
Darin zeigen:
- Fig. 1: eine schematische Darstellung zur Veranschaulichung eines erfindungsgemäßen Verfahrens; und
- Fig. 2: eine schematische Darstellung eines nicht aufgerollten Dichtbands.

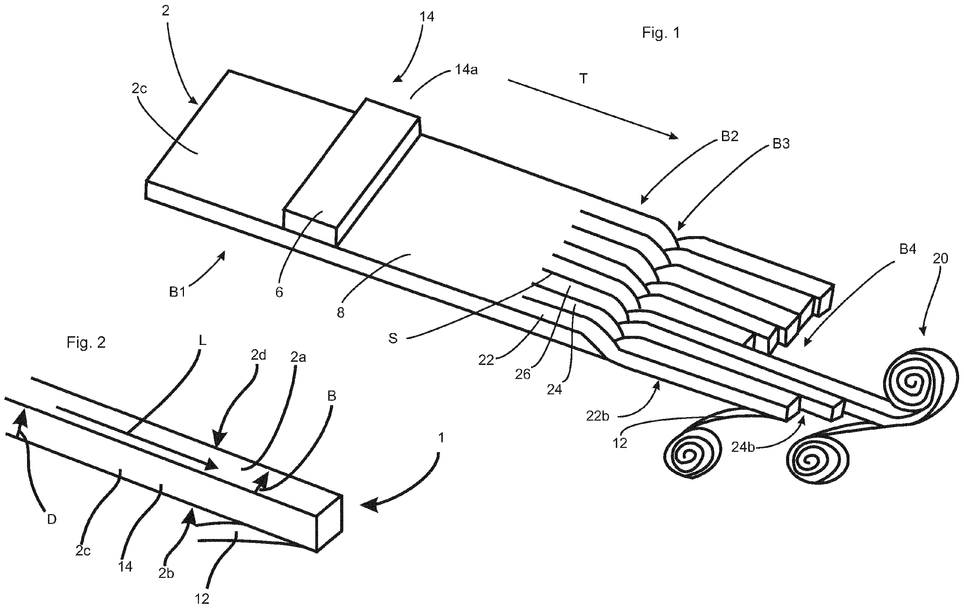

Fig. 1 zeigt eine schematische Darstellung zur Veranschaulichung der erfindungsgemäßen Vorgehensweise. Hierbei wird in einem Bereich B1 ein Schaumstoffträger 2 mit einer Oberfläche 2c in einer Transportrichtung T transportiert. Diese Transportrichtung T entspricht dabei auch der Längsrichtung des später herzustellenden Dichtbands. Diese Oberfläche wird mit einer (nur schematisch dargestellten) Bearbeitungseinrichtung 6 bearbeitet. Insbesondere handelt es sich dabei um eine Erwärmungseinrichtung, welche den Schaumstoffträger 2 erhitzt und insbesondere abschnittsweise schmilzt.

Diese Bearbeitungseinrichtung 6 kann dabei als erhitzte Rolle ausgeführt sein, welche die besagte Oberfläche des Schaumstoffträgers 2 kontaktiert. Es könnte sich aber auch um Erwärmungseinrichtungen wie etwa Infrarotelemente handeln, welche geringfügig oberhalb des Schaumstoffträgers angeordnet sind und diesen erhitzen.

Nach der Bearbeitung entsteht an der Oberfläche 2c eine Selbstverhautung 8, d. h. der Schaumstoffträger weist nun an eben dieser Oberfläche 2c andere physikalische Eigenschaften auf als an seinen übrigen Oberflächen. Insbesondere weist der Schaumstoffträger an eben dieser Oberfläche 2c auch andere physikalische Eigenschaften auf als in seinem Inneren.

Zusätzlich wäre es auch denkbar, an der der Oberfläche 2c gegenüberliegenden Oberfläche 2d (nicht gezeigt) eine Beschichtung (nicht gezeigt) anzubringen. Eine derartige Beschichtung könnte beispielsweise an dieser gegenüberliegenden Fläche angeklebt werden. Bei einer derartigen Beschichtung könnte es sich um ein Flächenelement handeln, welches von einer (nicht gezeigten) Rolle abgewickelt und auf der gegenüberliegenden Oberfläche angebracht wird.

Es wäre jedoch auch möglich, dass auch diese Oberfläche 2d bearbeitet und insbesondere erhitzt wird, um auch auf dieser Seite eine Verhautung zu erreichen.

In einem Bereich B2 wird in den bereits mit der Beschichtung 14 versehenen Schaumstoffträger 2 eine Vielzahl von Schnitten S eingebracht. Diese Schnitte sind dabei parallel zueinander und erstrecken sich ebenfalls in der Transportrichtung T. Durch diese Schnitte wird eine Vielzahl von Streifen 22, 24, 26 erzeugt, die parallel zueinander sind und die sich in der Transportrichtung T erstrecken.

In einem Bereich B3 werden diese einzelnen Streifen jeweils entgegen dem Uhrzeigersinn um 90° gedreht, so dass die mit der Selbstverhautung 8 versehenen Oberflächen jeweils in der Transportrichtung betrachtet nach rechts weisen. Falls an der gegenüberliegenden Oberfläche 2d eine Beschichtung oder Verhautung aufgebracht wird, wäre eine entsprechende Beschichtung oder Verhautung nach der Drehung auch an der in der Transportrichtung betrachtet linken Oberfläche vorhanden.

In einem Bereich B4 wird schließlich hier an der Unterseite der einzelnen geschnittenen Streifen eine Klebeschicht 12 angebracht. Dabei ist es möglich, dass die Streifen bereits auf diese Klebeschichten komprimiert werden. Anschließend erfolgt ein (nicht gezeigtes) Aufrollen der einzelnen Dichtbänder auf eine Dichtbandrolle 20. Die Bezugszeichen 22b und 24b kennzeichnen zwei Oberflächen, an denen die Beschichtung angeordnet sind.

Fig. 2 zeigt eine schematische Darstellung eines Dichtbandes 1 in einem nicht aufgerollten, d. h. frei voll expandierten Zustand. Dieses Dichtband weist dabei eine Längsrichtung L auf, sowie eine zu dieser Längsrichtung L senkrecht stehende Breitenrichtung B und eine Dickenrichtung D. Das Bezugszeichen 2c bezieht sich auf eine Oberfläche des Dichtbands, welche die Verhautung 8 aufweist. Auch an der rückwärtigen Oberfläche 2d könnte eine Beschichtung oder Verhautung angeordnet sein. Die Verhautung 8 auf der Seitenfläche 2c und die optional vorhandene Beschichtung oder Verhautung auf der Seitenfläche 2d unterscheiden sich bevorzugt in wenigstens einer physikalischen Eigenschaft voneinander.

Das Bezugszeichen 12 kennzeichnet eine Klebeschicht, welche an einer nach unten weisenden Oberfläche 2b angeordnet ist. Die Oberfläche 2a ist hier weder beschichtet noch mit einer Klebeschicht versehen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Dichtband
- 2: Schaumstoffträger
- 2a - 2d: Oberflächen
- 8: Verhautung
- 12: Selbstklebung
- 14: Beschichtung
- 14a: Oberfläche der Beschichtung
- 20: Dichtbandrolle
- 22, 24, 26: Streifen
- 22b, 24b: bearbeitete Oberflächen
- B1 - B4: Arbeitsbereiche
- S: Schnitte
- T: Transportrichtung
- B: Breitenrichtung
- D: Dickenrichtung
- L: Längenrichtung

## Patentansprüche

1. Verfahren zum Herstellen eine Dichtbandes mit den Schritten:
- Bereitstellen eines Schaumstoffträgers (2) und Transportieren desselben in einer vorgegebenen Transportrichtung (T),
- Bearbeiten einer ersten Oberfläche des Schaumstoffträgers
- Schneiden dieses Schaumstoffträgers in wenigstens zwei und bevorzugt eine Vielzahl von Streifen (22, 24, 26, )
- Anbringen einer Selbstklebung an einer weiteren Oberfläche (22b, 24b, 26b, 28b) der einzelnen Streifen
**dadurch gekennzeichnet, dass**
die Bearbeitung der Oberfläche des Schaumstoffträgers zumindest eine Erwärmung dieser Oberfläche beinhaltet.

2. Verfahren nach Anspruch 1,
**dadurch gekennzeichnet, dass**
durch die Erwärmung ein vorgegebener Anteil der Dicke des Schaumstoffträgers abgeschmolzen wird.

3. Verfahren nach wenigstens einem der vorangegangenen Ansprüche,
**dadurch gekennzeichnet, dass**
die erste Oberfläche mit einer Temperatur bearbeitet wird, die größer ist als 100°C.

4. Verfahren nach wenigstens einem der vorangegangenen Ansprüche,
**dadurch gekennzeichnet, dass**
die Bearbeitung durch Kontakt des Schaumstoffträges mit einer erhitzen Rolleneinrichtung erfolgt.

5. Verfahren nach wenigstens einem der vorangegangenen Ansprüche,
**dadurch gekennzeichnet, dass**
eine Dicke des Schaumstoffträgers (2) um wenigstens 0,3cm durch die Bearbeitung der Oberfläche reduziert wird.

6. Verfahren nach Anspruch 1,
**dadurch gekennzeichnet, dass**
der Schaumstoffträger ein imprägnierter Schaumstoffträger (2) ist.

7. Verfahren nach wenigstens einem der vorangegangenen Ansprüche,
**dadurch gekennzeichnet, dass**
die Bearbeitung der Oberfläche an einem imprägnierten und getrockneten Schaumstoffträger oder an einem nicht imprägnierten Schaumstoff vorgenommen wird.

8. Verfahren nach wenigstens einem der vorangegangenen Ansprüche,
**dadurch gekennzeichnet, dass**
die Streifen (22, 24, 26) jeweils bezüglich der Transportrichtung gedreht werden und bevorzugt um 90° bezüglich der Transportrichtung gedreht werden.

9. Verfahren nach wenigstens einem der vorangegangenen Ansprüche,
**dadurch gekennzeichnet, dass**
die Streifen wenigstens teilweise aufgerollt werden, wobei bevorzugt während dieses Aufrollvorgangs die Streifen in wenigstens einer Richtung komprimiert werden.

10. Als Dichtbandrolle konfektioniertes Dichtband, welches sich in einer ersten Längsrichtung (L) und in einer zu dieser Längsrichtung (L) senkrechten Breitenrichtung erstreckt, wobei dieses Dichtband eine erste Oberfläche (2a) aufweist, welche sich in dieser Längsrichtung (L) sowie der Breitenrichtung (B) erstreckt und eine zweite Oberfläche (2b), welche der ersten Oberfläche (2a) gegenüberliegt, wobei an einer dieser beiden Oberflächen (2a, 2b) eine Klebeschicht angeordnet ist und mit einer dritten Oberfläche (2c), welche sich in der Längsrichtung (L) erstreckt sowie in einer Dickenrichtung (D) des Dichtbandes (1) und einer vierten Oberfläche (2d), welche der dritten Oberfläche (2c) gegenüberliegt und welche sich ebenfalls in der Längsrichtung (L) und der Dickenrichtung (D) erstreckt, **dadurch gekennzeichnet, dass** die dritte Oberfläche (2c) und/oder die vierte Oberfläche (2d) eine durch einen Erwärmungsprozess bearbeitete Oberfläche ist.

11. Dichtband nach Anspruch 10,
**dadurch gekennzeichnet, dass**
das Dichtband in einem in der Dickenrichtung (D) komprimierten Zustand aufgerollt ist.

## Claims

1. Method of manufacturing a sealing tape comprising the steps:
- providing a foam carrier (2) and transporting it in a predetermined transport direction (T),
- processing of a first surface of the foam carrier,
- cutting this foam carrier into at least two and preferably a plurality of strips (22, 24, 26),
- applying a self-adhesive to a further surface (22b, 24b, 26b, 28b) of the individual strips,
**characterized in that**
the processing of the surface of the foam carrier includes at least heating of this surface.

2. Method according to claim 1,
**characterized in that**
the heating causes a predetermined proportion of the thickness of the foam carrier to melt.

3. Method according to at least one of the preceding claims,
**characterized in that**
the first surface is processed at a temperature greater than 100°C.

4. Method according to at least one of the preceding claims,
**characterized in that**
processing is carried out by contact of the foam carrier with a heated roller device.

5. Method according to at least one of the preceding claims,
**characterized in that**
a thickness of the foam carrier (2) is reduced by at least 0.3 cm by processing the surface.

6. Method according to claim 1,
**characterized in that**
the foam carrier is an impregnated foam carrier (2).

7. Method according to at least one of the preceding claims,
**characterized in that**
the processing of the surface is performed on an impregnated and dried foam carrier or on a non-impregnated foam.

8. Method according to at least one of the preceding claims,
**characterized in that**
the strips (22, 24, 26) are each rotated with respect to the transport direction and are preferably rotated by 90° with respect to the transport direction.

9. Method according to at least one of the preceding claims,
**characterized in that**
the strips are at least partially rolled up, wherein preferably during this rolling-up process the strips are compressed in at least one direction.

10. A sealing tape fabricated as a sealing tape roll extending in a first longitudinal direction (L) and in a width direction perpendicular to said longitudinal direction (L), wherein said sealing tape having a first surface (2a) extending in said longitudinal direction (L) and said width direction (B) and a second surface (2b) opposite to said first surface (2a), wherein an adhesive layer is arranged on one of said two surfaces (2a, 2b) and with a third surface (2c) which extends in the longitudinal direction (L) and in a thickness direction (D) of said sealing tape (1) and a fourth surface (2d) which is opposite to the third surface (2c) and which also extends in the longitudinal direction (L) and the thickness direction (D), **characterized in that**
the third surface (2c) and/or the fourth surface (2d) is a surface processed by a heating process.

11. Sealing tape according to claim 10,
**characterized in that**
the sealing tape is rolled up in a compressed state in the thickness direction (D).

## Revendications

1. Procédé de fabrication d'une bande d'étanchéité avec les étapes consistant à :
- fournir un support en mousse (2) et transporter celui-ci dans un sens de transport (T) prédéfini,
- traiter une première surface du support en mousse,
- couper ce support en mousse au moins en deux et de préférence en une pluralité de bandes (22, 24, 26),
- monter un autocollant au niveau d'une autre surface (22b, 24b, 26b, 28b) des bandes individuelles,
**caractérisé en ce que**
le traitement de la surface du support en mousse contient au moins un chauffage de cette surface.

2. Procédé selon la revendication 1,
**caractérisé en ce que**
une part prédéfinie de l'épaisseur du support en mousse est fondue par le chauffage.

3. Procédé selon au moins l'une quelconque des revendications précédentes,
**caractérisé en ce que**
la première surface est traitée avec une température qui est supérieure à 100 °C.

4. Procédé selon au moins l'une quelconque des revendications précédentes,
**caractérisé en ce que**
le traitement est effectué par contact du support en mousse avec un dispositif de rouleau chauffé.

5. Procédé selon au moins l'une quelconque des revendications précédentes,
**caractérisé en ce que**
une épaisseur du support en mousse (2) est réduite d'au moins 0,3 cm par le traitement de la surface.

6. Procédé selon la revendication 1,
**caractérisé en ce que**
le support en mousse est un support en mousse (2) imprégné.

7. Procédé selon au moins l'une quelconque des revendications précédentes,
**caractérisé en ce que**
le traitement de la surface est entrepris au niveau d'un support en mousse imprégné et séché ou au niveau d'une mousse non imprégnée.

8. Procédé selon au moins l'une quelconque des revendications précédentes,
**caractérisé en ce que**
les bandes (22, 24, 26) sont tournées respectivement par rapport au sens de transport et sont de préférence tournées de 90° par rapport au sens de transport.

9. Procédé selon au moins l'une quelconque des revendications précédentes,
**caractérisé en ce que**
les bandes sont enroulées au moins partiellement, dans lequel de préférence pendant ce processus d'enroulement, les bandes sont comprimées dans au moins un sens.

10. Bande d'étanchéité confectionnée comme rouleau de bande d'étanchéité qui s'étend dans un premier sens longitudinal (L) et dans un sens de la largeur perpendiculaire à ce sens longitudinal (L), dans laquelle cette bande d'étanchéité présente une première surface (2a) qui s'étend dans ce sens longitudinal (L) ainsi que le sens de la largeur (B) et une deuxième surface (2b) qui fait face à la première surface (2a), dans lequel une couche de colle est agencée au niveau d'une de ces deux surfaces (2a, 2b) et avec une troisième surface (2c) qui s'étend dans le sens longitudinal (L) ainsi que dans un sens de l'épaisseur (D) de la bande d'étanchéité (1) et une quatrième surface (2d) qui fait face à la troisième surface (2c) et qui s'étend aussi dans le sens longitudinal (L) et le sens de l'épaisseur (D),
**caractérisée en ce que**
la troisième surface (2c) et/ou la quatrième surface (2d) est une surface traitée par un processus de chauffage.

11. Bande d'étanchéité selon la revendication 10,
**caractérisée en ce que**
la bande d'étanchéité est enroulée dans un état comprimé dans le sens de l'épaisseur (D).
